# EUROPÄISCHE PATENTSCHRIFT

(11) **EP 3 102 405 B1**
(45) Veröffentlichungstag und Bekanntmachung des Hinweises auf die Patenterteilung: **18.11.2020**
(21) Anmeldenummer: 15704743.2
(22) Anmeldetag: 05.02.2015
(51) Int. Cl.: B32B 7/02, B32B 18/00, C04B 41/85, G02B 1/00

(54) **SUBSTRAT-KERAMIK-LAMINAT**
SUBSTRATE CERAMIC LAMINATE
STRATIFIÉ SUBSTRAT-CÉRAMIQUE

(30) Priorität: 07.02.2014 DE 102014001530
(43) Veröffentlichungstag der Anmeldung: 14.12.2016
(73) Patentinhaber: CeramTec-Etec GmbH, 53797 Lohmar (DE)
(72) Erfinder: SCHNETTER, Lars, 53518 Wimbach (DE); MENGES, Helen, 53359 Rheinbach (DE); EFFENBERGER, Dieter, 50769 Köln (DE); HAVERMANN, Benedikt, 53721 Siegburg (DE); SWERBINKA, Mathias, 53347 Alfter (DE); KUDRJASHOV, Dimitri, 53773 Hennef (DE); BAUR, Katharina, 50737 Köln (DE); WEICHOLD, Mandy, 53757 Sankt Augustin (DE)
(74) Vertreter: Fehrenbacher, Eckhard Anton
(86) Internationale Anmeldenummer: PCT/EP2015/052438
(87) Internationale Veröffentlichungsnummer: WO 2015/118079

(56) Entgegenhaltungen:
- DATABASE WPI Week 200837 Thomson Scientific, London, GB; AN 2008-F68190 XP002737799, & JP 2008 097014 A (SUMITOMO ELECTRIC IND LTD) 24. April 2008 (2008-04-24)
- DATABASE WPI Week 201202 Thomson Scientific, London, GB; AN 2011-Q73557 & WO 2011/158636 A1 (NGK INSULATORS LTD) 22 December 2011 (2011-12-22)

## Beschreibung

Die Erfindung betrifft Substrat-Keramik-Laminate. Insbesondere betrifft die Erfindung Substrat-Keramik-Laminate, bei denen die Keramik-Schicht eine Funktionsschicht ist.

Unter einer "Funktionsschicht" wird im Rahmen dieser Erfindung eine Schicht verstanden, die eine Keramik, insbesondere eine polykristalline Keramik, umfasst, die eine Funktion in Bezug auf das Gesamtbauteil bzw. das Laminat aus Substrat und Funktionsschicht aufweist. Diese Funktion ist im Wesentlichen nicht eine Träger- oder Stabilisierungsfunktion. Solche Funktionen können beispielsweise mechanisch, z.B. Kratzfestigkeit, chemisch, z.B. chemische Resistenz oder auch thermisch, z.B. thermische Beständigkeit oder auch optisch, z.B. eine Filterwirkung, sein. Die Aufzählung ist nicht vollständig und dient ausschließlich der näheren Erläuterung der Erfindung.

Grundsätzlich geht es um die Gestaltung einer mechanisch, chemisch oder thermisch resistenten Funktionsfläche. Hierbei wird auf ein Substrat eine Keramik-umfassende Schicht aufgebracht, im Folgenden auch nur "Keramik-Schicht" genannt, wobei die Keramik-Schicht eine spezielle Funktion hinsichtlich des Bauteils, in dem dieses Laminat aus Substrat und Keramik-umfassender Schicht verwendet wird, oder bezüglich des Laminats als solchem, aufweist. Die Keramik-umfassende Schicht ist dabei vergleichsweise dünn, weshalb ein tragendes Substrat-Material als sinnvolle Verstärkung verwendet wird.

Aus dem Stand der Technik sind Alternativlösungen bekannt: Dabei handelt es sich um chemisch und thermisch gehärtete Dünngläser oder Saphirgläser (synonym werden hier die Begriffe Saphireinkristall oder auch nur Saphir verwendet), hergestellt aus Einkristallen. Eine neuere Entwicklung ist das Aufbringen von sehr dünnen Saphir-Einkristallschichten auf ein Glassubstrat, also die Herstellung von Saphir-auf-Glas-Laminaten (SOG = sapphire on glass). Eine weitere Alternative besteht im Aufbringen von besonders harten Schichten wie z.B. DLC (diamond like carbon)-Schichten o.ä. auf Substrate.

Insbesondere bei der Beschichtung von Substraten mit Funktionsschichten, beispielsweise mittels PVC-(physical vapor deposition), CVD (chemical vapor deposition), Sol-Gel-Beschichtungen oder ähnlichem, tritt jedoch das Problem auf, dass sie in der Dicke der einzelnen Schichten und des Schichtpakets limitiert ist. Bei größeren Schichtdicken sind Haftfestigkeiten zwischen Substrat und Schicht für einige Anwendungen nicht mehr ausreichend; die Beschichtung platzt leicht ab. Die Schichten sind, vermutlich auch wegen der geringen Stärke, empfindlich, vor allem hinsichtlich der Haltbarkeit der Haftung zwischen Beschichtung und Substrat, aber auch hinsichtlich der Kratzfestigkeit.

Die Alternativen aus gehärtetem Glas, beispielsweise "Gorilla Glass" der Fa. Corning oder Xensation von Schott, weisen zwar üblicherweise hohe Festigkeiten von über 500 MPa auf, haben aber den Nachteil, nicht ausreichend kratzbeständig und/oder chemisch und thermisch beständig zu sein.

Saphir ist optisch doppelbrechend, sodass dieser bei einigen optischen Anwendungen Nachteile besitzt. Bezüglich mechanischer und thermischer Stabilität ist Saphir anisotrop. Bei hohen Beanspruchungen ist ein spezielles Design notwendig, um die am besten geeignete "Seite" oder Kristallfläche des Saphir-Einkristalls der maximalen Belastungsrichtung auszusetzen. Dies kann zur Folge haben, dass sehr große Einkristalle gezüchtet werden müssen, um Schnitte in der "richtigen Richtung" fertigen zu können. Auch aus diesem Grund ist Saphir extrem teuer.

Darüber hinaus weist Saphir eine Mohshärte von 9 auf und ist daher sehr schwierig zu bearbeiten. Schneiden, Schleifen oder Polieren ist nur mit Diamantwerkzeugen möglich. Daher ist es auch schwierig und aufwendig, Saphir-Substrate in komplexeren Geometrien zu bearbeiten bzw. herzustellen.

Die SOG-Laminate, meist eine 0,56 mm starke Saphireinkristall-Schicht auf 3 bis 6 mm starkem, chemisch gehärtetem Glas, ermöglichen es, kostengünstigere, transparente Verschleißschutzschichten zu erzeugen. Die Herstellkosten sind aber trotzdem noch sehr hoch. Darüber hinaus bleibt die Problematik der Doppelbrechung erhalten, ebenso, wie die Schwierigkeiten der Bearbeitung. Das Saphirglas wird im Allgemeinen aus einem größeren Stück mittels Diamantsägen herausgesägt und muss beidseitig poliert werden. Die aufwendige Politur führt ebenfalls zu hohen Kosten für diese Anwendung.

JP2008 097014 A zeigt transparente Schutzschichten umfassend Metallfluoride für Flüssigkristallanzeigen. WO 2011/158636 A1 zeigt ein Composit-Material aus einem piezoelektrischen Substrat, einem Haftvermittler und einem Substrat (supporting substrate) aus einem Spinell, bevorzugt einem polykristallinen Mg-AlOxid, diese sind allerdings nicht transparent.

Die Aufgabe der Erfindung besteht in der Bereitstellung von Bauteilen mit Funktionsoberflächen, die kostengünstiger herstellbar sind als entsprechende, aus dem Stand der Technik bekannte Bauteile. Die Bauteile sollen darüber hinaus zumindest teilweise transparent sein.

Die Aufgabe wird durch den Gegenstand des Anspruchs 1 gelöst; vorteilhafte Ausführungsformen der Erfindung lassen sich den Unteransprüchen entnehmen.

Demnach umfasst ein erfindungsgemäßer Gegenstand ein Bauteil mit einer Funktionsoberfläche. Dabei umfasst das Bauteil ein Substrat und eine polykristalline Funktionsschicht, wobei die Funktionsschicht die Funktionsoberfläche umfasst oder bereitstellt.

Erfindungsgemäß umfasst die Funktionsschicht eine polykristalline Keramik.

Je nach Verwendungszweck des erfindungsgemäßen Bauteils können verschiedenste Materialien für das Substrat verwendet werden. So können beispielsweise Kunststoffe, Gläser, Glaskeramiken oder Keramiken, aber auch Verbundwerkstoffe und flexible Materialien verwendet werden, wobei diese Auswahl keine Einschränkung darstellen soll. Für Anwendungen, die ein transparentes Bauteil voraussetzen, bieten sich insbesondere Gläser, aber auch Kunststoffe als Substratmaterialien an. Für Anwendungen, in denen keine Transparenz gewünscht oder gefordert ist, können natürlich auch transluzente oder opake Materialien für das Substrat eingesetzt werden.

Unter einer transparenten Keramik im Sinne der Erfindung wird eine Keramik verstanden, die eine RIT (Real In-Line Transmission) von mindestens 40%, bevorzugt von mindestens 60%, bei 300 nm, 600 nm und/oder 1500 nm Wellenlänge des Lichts besitzt.

Die Transmission des Materials wird zum Ausschluss von Streulicht aus Messungen mit einem sehr engen Aperturwinkel von etwa 0,5° gemessen und der Messwert dann ins Verhältnis zur theoretisch maximalen Transmission für dieses Material gesetzt. Daraus ergibt sich dann die bestimmte RIT.

Rein theoretisch ist die Transparenz dickenunabhängig, wenn ein perfekter Werkstoff vorliegt und daraus eine perfekte Keramik hergestellt wurde. Sobald die Keramik jedoch Poren o.ä. enthält, tritt ein Streu-Effekt an den Phasengrenzen der Poren auf, der mit zunehmender Dicke der Keramik stärker wird. Dieser Effekt führt zu einer abnehmenden Transparenz. Daher beziehen sich die Begriffe "Transparenz" und "RIT" im Rahmen dieser Erfindung auf Keramiken mit Stärken zwischen 50 µm und 100 mm.

Auch die Funktionsschichten können, je nach Anwendung, transparente, transluzente oder opake Keramiken umfassen. Besonders bevorzugt werden transparente Keramiken als Funktionsschichten, weil sie wesentliche Vorteile von Gläsern und Keramiken miteinander verbinden. Erfindungsgemäß werden Al-Mg-Spinell-, ZrO₂-, -Al₂O₃- oder Mischoxid-Keramiken aus dem System γ-Al-Mg-O verwendet. In Verbindung mit einem ebenfalls transparenten Substrat können diese Bauteile als Alternativen zu den sehr teuren Saphir-Einkristall-Anwendungen Verwendung finden. Im Vergleich zu Saphir bieten Funktionsschichten aus Keramiken diverse Vorteile:
Saphirgläser sind aufgrund ihrer Einkristallstruktur optisch, mechanisch und chemisch anisotrop, d.h. sie sind optisch doppelbrechend und weisen Vorzugsrichtungen hinsichtlich aller anderen Eigenschaften auf. Polykristalline Keramiken sind aufgrund ihres ungeregelten Gefüges im Wesentlichen isotrop. Dies gilt bei transparenten Keramiken, deren Minerale kubisch sind, auch hinsichtlich der Optik, d.h. es existiert keine Doppelbrechung. Bei nicht-kubischen, transparenten Keramiken existiert zwar eine Doppelbrechung, da die Korngröße der Minerale zur Herstellung der Transparenz jedoch unter 100 nm liegen muss, ist der Effekt der Doppelbrechung in diesen polykristallinen Materialien im Allgemeinen zu vernachlässigen.

Ein weiterer Vorteil von Keramik, insbesondere von Spinell-Keramiken, ist die hervorragende Bearbeitbarkeit bei vergleichbarer Härte zu Saphirgläsern. Verwendet man beispielsweise eine 0,5 bis 2 mm dicke transparente Keramik (Spinell)-Schicht als Funktionsschicht, so kann eine vergleichbar kratzfeste, chemisch und thermisch resistente Schicht wie bei SOG-Verbünden erzeugt werden. Da die Bearbeitungszeit (Polieren auf eine vorgegebene Oberflächengüte) von einer Spinell-Keramik nur etwa ¼ der Zeit beansprucht, die für die gleiche Bearbeitung eines Saphirglases benötigt wird, ist die Prozesszeit wesentlich verkürzt, was zu deutlich geringeren Kosten führt.

Die überraschende Feststellung, dass (Spinell-)Keramiken deutlich besser zu bearbeiten sind als Saphirgläser, obwohl beide die gleiche Mohshärte aufweisen, ist wahrscheinlich auf die polykristalline Struktur der Keramik zurückzuführen. Es wird vermutet, dass durch die Bearbeitung einzelne Kristalle aus der Struktur der Keramik herausgebrochen werden. Das Herausbrechen von Kristallen scheint leichter möglich zu sein, als die Kristallstruktur als solche zu bearbeiten.

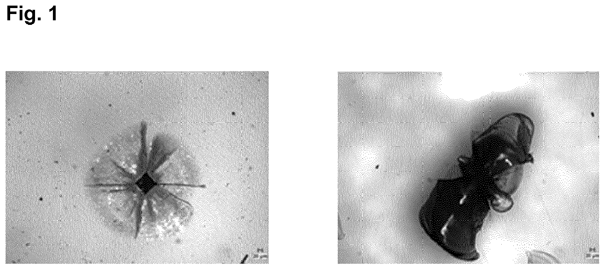

Ein weiterer Vorteil von Keramiken, insbesondere von Spinell-Keramiken, ist eine höhere "Mikroschadenstoleranz" im Vergleich zu einem gleich starken Saphirglas, siehe Fig. 1. Diese Figur zeigt im linken Bild eine transparente Spinell-Keramik und im rechten Bild ein Saphirglas. Beide Materialien wurden einer Vickershärte-Prüfung unterzogen, wobei Schäden verursacht wurden. Der Schaden in der Spinell-Keramik entspricht im Wesentlichen dem Abdruck des Vickers-Indenters, während sich der Schaden im Saphirglas durch Abplatzungen weiter in die Umgebung ausgedehnt hat.

Darüber hinaus sind polykristalline Keramiken besser dotierbar als Saphirgläser. Die Dotierung kann zur Erzeugung von optischen Bandfiltern und Einfärbungen insbesondere in transparenten Funktionsschichten vorgenommen werden. Die Dotierung kann bis zu 5 Gew.-% des Ausgangsmaterials betragen. Als Dotierungselemente kommen Elemente aus den Reihen der Lanthanoide, Actinoide sowie Fe, Cr, Co, Cu und andere bekannte Dotierungselemente infrage.

Weitere Funktionen, die mit erfindungsgemäßen Funktionsschichten herstellbar sind, sind allgemein mechanische, chemische oder thermische Resistenzen oder eben die bereits beschriebenen optischen Funktionen. Insbesondere können eine Antireflexwirkung, Antikratz- und/oder eine Antibeschlagwirkung erzielt werden, wobei, je nach Material, auch mehrere Funktionen mit dem gleichen Material erzielt werden können.

Erfindungsgemäß sind das Substrat und die Funktionsschicht mittels eines Haftvermittlers miteinander verbunden, wobei der Haftvermittler insbesondere ein Kleber sein kann, wobei als Haftvermittler beispielsweise ein transparenter Kleber verwendet wird, dessen Brechungsindex zwischen dem Brechungsindex des Substrats und der Funktionsschicht vermittelt.

Ein weiterer Vorteil bei der Verwendung eines Haftvermittlers zwischen Substrat und Funktionsschicht liegt darin, dass die Funktionsschicht nur auf der Oberseite, also der dem Substrat abgewandten Seite der Funktionsschicht, poliert werden muss, wenn ein Haftvermittler mit entsprechendem Brechungsindex gewählt wurde. Der Brechungsindex des Haftvermittlers sollte dann dem Brechungsindex der Funktionsschicht sehr ähnlich sein, so dass für die beabsichtigte Verwendung kein wahrnehmbarer Phasenübergang oder eine wahrnehmbare Grenzfläche entsteht.

Um Kosten zu sparen und positive Eigenschaften verschiedener Werkstoffe zu kombinieren, können sehr dünne Keramikschichten (< 2 mm, besser < 0,5 mm, besonders bevorzugt 100 µm) mit anderen transparenten Werkstoffen, insbesondere Glas laminiert werden.

Weist die Funktionsschicht eine Stärke kleiner 100 µm auf, ist sie flexibel. Das hat den Vorteil, dass gebogene Substrate problemlos mit einer solchen Schicht versehen werden können, da sich die Funktionsschicht an die gebogene Form des Substrats anpassen kann. Dies ist beispielsweise bei Windschutzscheiben oder Uhrgläsern oder eben allen nicht-planen Substraten von Vorteil. Natürlich können mit diesen Funktionsschichten auch flexible Materialien wie Kunststoffe versehen werden.

Verwendet man darüber hinaus noch im Brechungsindex angepasste Haftvermittler, so kann beispielsweise auf ein chemisch gehärtetes Glassubstrat eine extrem dünne (< 500 µm oder auch < 100 µm) dicke transparente Keramik-Schicht aufgebracht werden, ohne die Seite der Keramik-Schicht zu polieren, die mit dem Glassubstrat bzw. dem Haftvermittler in Kontakt steht. Der Haftvermittler, beispielsweise ein Kleber, gleicht die Unebenheiten der Oberfläche optisch aus, da er im Wesentlichen den gleichen Brechungsindex wie die Keramik aufweist. Anschließend muss nur noch die Oberfläche des Gesamtbauteils poliert werden. So können sehr dünne Schichten, z.B. kleiner 100 µm stark, poliert werden.

Eine Politur der Keramik ist damit nur auf der Oberseite des Bauteils notwendig. Das ist kostengünstiger, u.a., weil man sich eine zweiseitige Politur spart. Im Vergleich mit einem Saphirglas kann beispielsweise eine Spinell-Keramik in ¼ der Zeit auf die gleiche Oberflächengüte poliert werden. Ist dann zusätzlich noch eine Politur nur auf einer Seite der Funktionsschicht statt auf beiden Seiten notwendig, so können ¾ der Zeit, die für die Herstellung der Oberflächengüte einer vergleichbaren Saphirfunktionsschicht notwendig wäre, eingespart werden.

Muss das Bauteil nicht transparent sein, kann natürlich ebenfalls nur eine Seite der Funktionsschicht poliert oder die Funktionsschicht überhaupt unpoliert sein. Die Verwendung eines Klebers, der Brechungsindex-angepasst ist, ist dann natürlich obsolet.

Konkrete Anwendung für erfindungsgemäße Bauteile sind Scanneroberflächen, beispielsweise von Scannerkassen, Oberflächen von Strahlkabinen sowie alle verschleißbeanspruchten transparenten Flächen wie auch beispielsweise Bodenbeläge, Treppen oder auch Uhrgläser.

Durch eine Kombination von sehr dünnem, chemisch gehärtetem Glas, beispielsweise in einer Stärke von 0,3 bis 5 mm, mit einer noch dünneren polykristallinen, transparenten Keramik, beispielsweise mit einer Stärke von 0,02 bis 0,8 mm, können extrem beanspruchbare dünne optische Bauteile erzeugt werden, die beispielsweise hervorragend geeignet sind für Displays von Handys, Tablets, Computern im Allgemeinen, etc. Durch die deutlich dünnere Keramikschicht kann die Kratzfestigkeit der Keramik sowie die anderen beschriebenen Eigenschaften genutzt werden und der größte Nachteil von Keramiken, die zu geringen Festigkeiten bei geringen Bauteildicken, beispielsweise 200 bis 300 MPa, durch das chemisch gehärtete Glas ausgeglichen werden. Dieses System hat auch den besonderen Vorteil deutlich günstiger zu sein als die SOG-Laminate.

Ein weiterer Aspekt der Erfindung ist die Möglichkeit der Gestaltung von größeren, insbesondere transparenten Flächen. Durch die Verwendung eines Brechungsindexangepassten Haftvermittlers kann aus vielen kleineren Kacheln (Multi-Tile), die beispielsweise nebeneinander in den Haftvermittler eingebettet sind, eine große Fläche gestaltet werden. So können z.B. flächige Diplays für große Fernseher geschaffen werden, die mit Saphirgläsern aufgrund der Einkristall-Limitierung nicht herstellbar sind.

## Patentansprüche

1. Bauteil mit Funktionsoberfläche, wobei das Bauteil ein Substrat und eine polykristalline Funktionsschicht umfasst, wobei die Funktionsschicht die Funktionsoberfläche umfasst, **dadurch gekennzeichnet, dass** das Substrat und die Funktionsschicht mittels eines Haftvermittlers miteinander verbunden sind und dass die Funktionsschicht aus einem Al-Mg-Spinell-, einer Al₂O₃-, einer ZrO₂- oder einer Mischoxid-Keramik aus dem System Y-Al-Mg-O besteht, wobei bis zu 5 Gew.-% Dotierungselemente enthalten sein können, und das Bauteil zumindest teilweise transparent ist und
wobei der Haftvermittler transparent ist und einen Brechungsindex aufweist, der zwischen dem Brechungsindex des Substrats und der Funktionsschicht vermittelt, oder ein transparenter Haftvermittler, der den gleichen Brechungsindex wie die Funktionsschicht aufweist.

2. Bauteil nach Anspruch 1, **dadurch gekennzeichnet, dass** die polykristalline Funktionsschicht eine Keramik umfasst.

3. Bauteil nach Anspruch 1 oder 2, **dadurch gekennzeichnet, dass** das Substrat einen Kunststoff, ein Glas, eine Glaskeramik oder eine Keramik oder einen Verbundwerkstoff oder ein flexibles Material umfasst.

4. Bauteil nach einem der vorhergehenden Ansprüche, **dadurch gekennzeichnet, dass** die Funktionsschicht eine Stärke kleiner 2 mm, bevorzugt kleiner als 0,5 mm und besonders bevorzugt kleiner 100 µm aufweist.

5. Bauteil nach einem der vorhergehenden Ansprüche, **dadurch gekennzeichnet, dass** das Substrat und/oder die Funktionsschicht transparent ist.

6. Bauteil nach einem der vorhergehenden Ansprüche, **dadurch gekennzeichnet, dass** die Funktionsschicht eine optische Funktion, insbesondere eine Antireflexwirkung und/oder eine Filterwirkung aufweist.

7. Bauteil nach einem der vorhergehenden Ansprüche, **dadurch gekennzeichnet, dass** die Funktionsschicht nur auf einer dem Substrat abgewandten Seite, poliert ist.

8. Bauteil nach einem der vorhergehenden Ansprüche, **dadurch gekennzeichnet, dass** der Haftvermittler ein transparenter Kleber ist, dessen Brechungsindex dem Brechungsindex der Funktionsschicht sehr ähnlich ist, damit für die beabsichtigte Verwendung kein wahrnehmbarer Phasenübergang oder keine wahrnehmbare Grenzfläche entsteht.

9. Verwendung eines Bauteils nach einem der vorhergehenden Ansprüche als verschleißbeanspruchte, transparente Oberfläche, beispielsweise als Scanneroberfläche von Kassensystemen, Oberflächen von Strahlkabinen, Bodenbelägen, Uhrgläsern oder Treppen.

10. Verwendung eines Bauteils nach einem der vorhergehenden Ansprüche in optischen Bauteilen, insbesondere für Displays von Handys, Tablets oder Computern im Allgemeinen.

## Claims

1. Component having a functional surface, the component comprising a substrate and a polycrystalline functional layer, the functional layer comprising the functional surface, **characterized in that** the substrate and the functional layer are interconnected by means of an adhesion promoter and **in that** the functional layer consists of an Al-Mg spinel, an Al₂O₃-, a ZrO₂- or a mixed oxide ceramic material from the system Y-Al-Mg-O, it being possible for up to 5 wt.% doping elements to be contained, and the component being at least partially transparent and the adhesion promoter being transparent and having a refractive index that lies between the refractive index of the substrate and the functional layer, or a transparent adhesion promoter that has the same refractive index as the functional layer.

2. Component according to claim 1, **characterized in that** the polycrystalline functional layer comprises a ceramic material.

3. Component according to either claim 1 or claim 2, **characterized in that** the substrate comprises a plastics material, a glass material, a glass ceramic material or a ceramic material or a composite material or a flexible material.

4. Component according to any of the preceding claims, **characterized in that** the functional layer has a thickness of less than 2 mm, preferably less than 0.5 mm and particularly preferably less than 100 µm.

5. Component according to any of the preceding claims, **characterized in that** the substrate and/or the functional layer is transparent.

6. Component according to any of the preceding claims, **characterized in that** the functional layer has an optical function, in particular an anti-reflection effect and/or a filter effect.

7. Component according to any of the preceding claims, **characterized in that** the functional layer is polished only on a side facing away from the substrate.

8. Component according to any of the preceding claims, **characterized in that** the adhesion promoter is a transparent adhesive, the refractive index of which is very similar to the refractive index of the functional layer, so that no perceptible phase transition or no perceptible interface is produced for the intended use.

9. Use of a component according to any of the preceding claims as a transparent surface that is subject to wear, for example as a scanning surface of checkout systems, surfaces of blasting cabins, floor coverings, watch glasses or stairs.

10. Use of a component according to any of the preceding claims in optical components, in particular for displays of mobile phones, tablets or computers in general.

## Revendications

1. Composant à surface fonctionnelle, le composant comprenant un substrat et une couche fonctionnelle polycristalline, la couche fonctionnelle comprenant la surface fonctionnelle, **caractérisé en ce que** le substrat et la couche fonctionnelle sont reliés l'un à l'autre au moyen d'un agent adhésif et **en ce que** la couche fonctionnelle est constituée d'un spinelle Al-Mg, d'un Al₂O₃-, d'un ZrO₂- ou d'une céramique à oxyde mixte du système Y-Al-Mg-O, jusqu'à 5 % en poids d'éléments dopants pouvant être contenus,
et le composant étant au moins partiellement transparent et
l'agent adhésif étant transparent et présentant un indice de réfraction qui intervient entre l'indice de réfraction du substrat et de la couche fonctionnelle, ou un agent adhésif transparent présentant le même indice de réfraction que la couche fonctionnelle.

2. Composant selon la revendication 1, **caractérisé en ce que** la couche fonctionnelle polycristalline comprend une céramique.

3. Composant selon la revendication 1 ou 2, **caractérisé en ce que** le substrat comprend une matière plastique, un verre, une vitrocéramique ou une céramique ou un matériau composite ou un matériau souple.

4. Composant selon l'une des revendications précédentes, **caractérisé en ce que** la couche fonctionnelle présente une épaisseur inférieure à 2 mm, de préférence inférieure à 0,5 mm et de manière particulièrement préférée inférieure à 100 µm.

5. Composant selon l'une des revendications précédentes, **caractérisé en ce que** le substrat et/ou la couche fonctionnelle sont transparents.

6. Composant selon l'une des revendications précédentes, **caractérisé en ce que** la couche fonctionnelle présente une fonction optique, en particulier un effet antireflet et/ou un effet filtrant.

7. Composant selon l'une des revendications précédentes, **caractérisé en ce que** la couche fonctionnelle n'est polie que sur un côté détourné du substrat.

8. Composant selon l'une des revendications précédentes, **caractérisé en ce que** l'agent adhésif est une colle transparente dont l'indice de réfraction est très similaire à l'indice de réfraction de la couche fonctionnelle, de sorte qu'aucune transition de phase perceptible ou aucune interface perceptible ne se produit pour l'utilisation envisagée.

9. Utilisation d'un composant selon l'une des revendications précédentes comme surface transparente soumise à l'usure, par exemple comme surface de scanner de systèmes de caisse, surfaces de cabines de sablage, revêtements de sol, verres de montre ou escaliers.

10. Utilisation d'un composant selon l'une des revendications précédentes dans des composants optiques, en particulier pour des écrans de téléphones portables, de tablettes ou d'ordinateurs en général.
